# EUROPÄISCHE PATENTSCHRIFT

(11) **EP 2 215 397 B1**
(45) Veröffentlichungstag und Bekanntmachung des Hinweises auf die Patenterteilung: **11.05.2011**
(21) Anmeldenummer: 08844824.6
(22) Anmeldetag: 21.10.2008
(51) Int. Cl.: F16M 11/04, F16M 11/14

(54) **STATIVKOPF**
TRIPOD HEAD
TETE DE TREPIED

(30) Priorität: 30.10.2007 DE 102007052039
(43) Veröffentlichungstag der Anmeldung: 11.08.2010
(60) Teilanmeldung: 10013252.1
(73) Patentinhaber: FLM GmbH Foto-, Licht- und Meßtechnisches Zubehör, 79312 Emmendingen (DE)
(72) Erfinder: BÜRKLIN, Werner, 79312 Emmendingen (DE)
(74) Vertreter: Maucher, Wolfgang
(86) Internationale Anmeldenummer: PCT/EP2008/008892
(87) Internationale Veröffentlichungsnummer: WO 2009/056249

(56) Entgegenhaltungen:
- EP-A- 1 365 187
- EP-A- 1 473 510
- FR-A- 2 799 807
- US-A- 3 612 462
- US-A1- 2007 147 829

## Beschreibung

Die Erfindung bezieht sich auf einen Stativkopf mit einer Neigevorrichtung mit einem Kugelgelenk, das eine in einem Lagergehäuse verschwenkbar gelagerte Gelenkkugel aufweist, die zwischen zwei Gleitlagern in dem Lagergehäuse gelagert ist, von denen eines der Gleitlager in Beabstandungsrichtung der Gleitlager axial verschiebbar in dem Lagergehäuse gelagert ist, wobei das Kugelgelenk zwischen an einander abgewandten Enden der Neigevorrichtung befindlichen Anschlussstellen angeordnet ist, von denen eine mit einer Kamera, einem Spektiv, einem Fernglas oder dergleichen optischen Gerät oder einer Haltevorrichtung und die andere mit wenigstens einem Stativbein oder dergleichen Halterung verbunden oder verbindbar ist.

Eine solche Neigeeinheit ist beispielsweise aus der deutschen Patentanmeldung 10 2006 001 580 A1 bekannt. Das axial verschiebbare Gleitlager ist dabei aber nur an einer Stelle durch einen kegelförmigen Stift abgestützt. Durch die geringe Auflagefläche ist die Kraft, mit der das Gleitlager gegen das Kugelgelenk gepresst werden kann, entsprechend gering. Dadurch ergibt sich eine insgesamt nur geringe Tragfähigkeit des gesamten Stativkopfes. Darüber hinaus entsteht durch die einseitige Kraftbeaufschlagung ein Kippmoment, durch das das Gleitlager in dem Lagergehäuse verkanten kann und es dadurch zu Beschädigungen des Lagergehäuses oder des Gleitlagers kommen kann.

Aus der EP 1 473 510 A1 ist ein Stativkopf vorbekannt, der ein zylindrisches Lagergehäuse hat, in dessen Gehäuseinneren eine Gelenkkugel drehbar und schwenkbar gelagert ist. Im Lagergehäuse des vorbekannten Stativkopfes ist auch ein Lagerelement axial verschiebbar und drehbar angeordnet, das eine am Umfang der Gelenkkugel anliegende Gleitfläche aufweist. Dem Lagerelement ist ein Auflager zugeordnet, das mit einer Stelleinrichtung derart in Wirkverbindung steht, dass das Lagerelement zur Erzielung der Klemmwirkung gegen die Gelenkkugel verschoben werden kann. Diese Stelleinrichtung hat kreisbogenförmige Organe, die über eine Stellschraube miteinander verbunden sind, welche Stellschraube im Bereich der Organe gegenläufige Gewindeabschnitte aufweist. An diesen Organen sind zueinander parallele Schrägflächen vorgesehen, die mit einer komplementären Gegenschräge an der der Gelenkkugel abgewandten Stirnseite des Auflagers zusammenwirken. Weitere Stativköpfe mit Neigevorrichtungen sind auch aus der FR 2 799 807 A und der US 2007/147829 A1 bekannt.

Durch die bei dem aus der EP 1 473 510 A1 vorbekannten Stativkopf vorgesehenen Schrägen und Gegenschrägen müssen hohe Reibkräfte überwunden werden, um die durch die Stellschraube aufgebrachte Relativbewegung der Organe zueinander in eine axiale Stellbewegung des Auflagers und des darauf befindlichen Lagerelements in Klemmrichtung zur Gelenkkugel umzusetzen. Aufgrund der hohen Reibkräfte lassen sich auf die Gelenkkugel kaum solche Klemmkräfte aufbringen, die zum Festklemmen einer durch schwere Lasten beaufschlagten Gelenkkugel erforderlich wären. Der aus EP 1 473 510 A1 vorbekannte Stativkopf ist daher für schwere Kameras oder dergleichen optische Geräte weniger gut geeignet.

Nachteilig ist im übrigen auch, dass vergleichbar hohe Reibkräfte auch überwunden werden müssen, wenn die Klemmverbindung zwischen Gelenkkugel und Lagerelement gelockert und die Organe dazu in ihre Ausgangsstellung bewegt werden sollen.

Aus der DE 27 47 677 A1 ist bereits ein Stativkopf vorbekannt, der eine Wechselplatte hat, an der eine Kamera, ein Fernglas, ein Spektiv oder dergleichen optisches Gerät befestigt werden kann. Dieser Wechselplatte ist eine Basis zugeordnet, die an einem Stativ oder dergleichen Tragegestell befestigt werden kann. An der Basis ist eine Schwalbenschwanzführung mit einer Führungsschiene zur verschieblichen Lagerung der Wechselplatte und einer zur Basis relativ beweglichen Klemmvorrichtung zur Festlegung der Wechselplatte in die Führungsschiene vorgesehen. Die Klemmvorrichtung kann als ein Schwenkhebel ausgestaltet sein, der zwischen einer die Wechselplatte zur Entnahme freigebenden Offenstellung und einer Schließstellung verdrehbar ist, in welcher Schließstellung die Wechselplatte verschieblich in der Führung aufgenommen ist. Während der Schwenkhebel in seiner Offenstellung die für die Wechselplatte bestimmte Ausnehmung in der Basis freigibt, wird die Wechselplatte in der Schließstellung des Schwenkhebels der Basis blockiert. Da die Wechselplatte in der Offenstellung noch in der Basis gesichert ist und da zur Sicherung der Wechselplatte in der Basis noch ein Verdrehen des Schwenkhebels erforderlich ist, ist der vorbekannte Stativkopf für eine einzelne Bedienperson nur schwer handhabbar, insbesondere wenn diese Bedienperson ein schweres optisches Gerät an dem aus DE 27 47 677 A 1 vorbekannten Stativkopf befestigen will.

Es besteht daher die Aufgabe, einen Stativkopf zu schaffen, der im Vergleich zum oben beschriebenen Stand der Technik eine höhere Tragkraft insbesondere auch für schwere optische Instrumente aufweist.

Diese Aufgabe wird erfindungsgemäß dadurch gelöst, dass in dem Lagergehäuse ein an einem Spalt aufweitbarer Klemmring mit einer sich zur Längsmittelebene in Richtung zur Gelenkkugel verjüngenden Schrägfläche angeordnet ist und die Schrägfläche mit einer komplementär geformten Gegenschräge an dem axial verschiebbaren Gleitlager zusammenwirkt.

Wird nun der Klemmring aufgeweitet, gleitet das Gleitlager an der Schrägfläche in axialer Richtung gegen die Gelenkkugel und drückt diese gegen das zweite, feststehende Gleitlager.

Der Klemmring ist dabei auf der anderen Seite durch einen Sprengring oder dergleichen Mittel in seiner Position festgelegt, so dass keine andere Ausweichbewegung möglich ist.

Da der Klemmring, bis auf den schmalen Spalt, vollumfänglich mit dem Gleitlager zusammenwirkt, wird die axiale Kraft gleichmäßig über den Umfang des Gleitlagers verteilt, so dass kein Kippmoment entsteht. Eine Beschädigung des Gleitlagers oder des Lagergehäuses durch ein Verkanten ist daher praktisch ausgeschlossen.

Weiterhin kann dadurch eine wesentlich größere Andruckkraft auf die Gelenkkugel aufgebracht werden, wodurch die Tragfähigkeit des Stativkopfes im Vergleich zum Stand der Technik wesentlich erhöht wird.

Weitere vorteilhafte Merkmale der Erfindung ergeben sich aus den Unteransprüchen und dem Ausführungsbeispiel, das nachfolgend anhand der Zeichnungen näher erläutert ist. Die Haltevorrichtung, die in den Fig. 1, 3 und 4 erlaütest ist, gehört jedoch nich zu der Erfindung.

Es zeigen:
- Fig. 1: ein Längsschnitt durch einen erfindungsgemäßen Sta- tivkopf mit Haltevorrichtung und Wechselplatte,
- Fig. 2: ein Querschnitt durch den Stativkopf,
- Fig. 3: ein Querschnitt durch die Haltevorrichtung mit halb eingerasteter Wechselplatte und
- Fig. 4: eine Aufsicht der Haltevorrichtung.

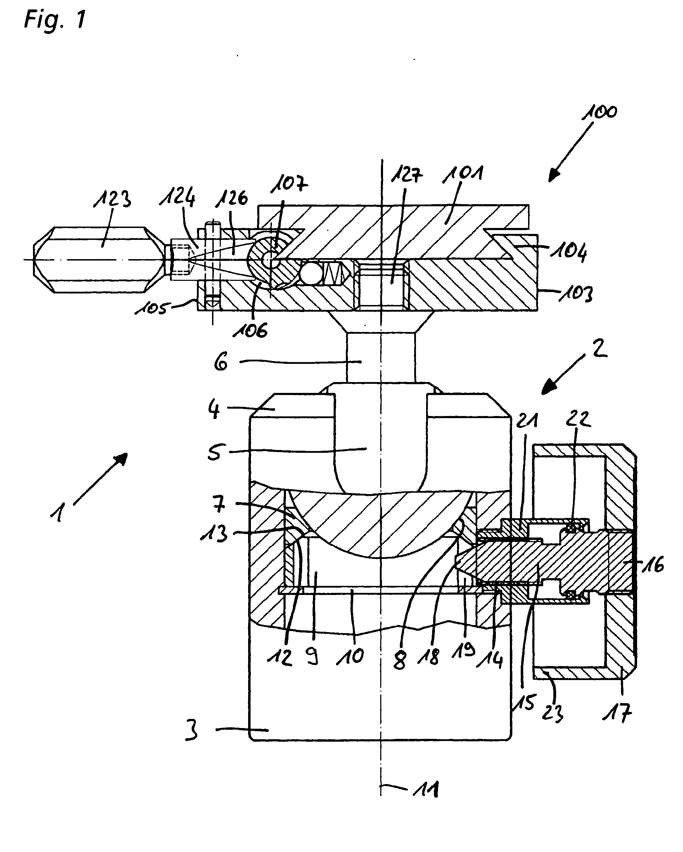

Die Fig. 1 zeigt einen im Ganzen mit 1 bezeichneten Stativkopf mit einer Neigevorrichtung 2 und einer daran befestigten Haltevorrichtung 100 mit einer Schnellwechselplatte 101.

Die Neigevorrichtung 2 weist ein etwa zylinderförmiges Lagergehäuse 3 auf, das als Hohlzylinder ausgebildet ist. An seinem oberen Ende 4 ist ein in der Abbildung nicht sichtbarer, rechtwinklig nach innen gerichteter Flansch angeordnet, der eine obere Lagerschale für ein Kugelgelenk bildet. An dem Flansch ist ein ebenfalls durch die Teilschnittansicht nicht sichtbares Gleitlager mit einer vorzugsweise sphärischen Gleitfläche angeordnet, das mit einer Gelenkkugel 5 zusammenwirkt.

Die Gelenkkugel 5 weist in axialer Richtung des Lagergehäuses 3 einen geraden Fortsatz 6 mit einem Gewinde auf, an dem eine Nutzlast befestigt werden kann. Unterhalb der Gelenkkugel 5 ist ein weiteres, axial verschiebliches Gleitlager 7 mit einer sphärischen, an die Kugel 5 angepassten Lagerfläche 8 angeordnet. An das Gleitlager 7 schließt sich ein Klemmring 9 an. Die gesamte Anordnung wird durch ein Widerlager 10 nach unten abgestützt und damit im Lagergehäuse 3 gehalten.

Der Klemmring 9 weist einen im Vergleich zum Innendurchmesser des Lagergehäuses 3 reduzierten Umfang auf. Weiterhin verfügt der Klemmring 9 an seiner Oberkante eine zur Längsmittelachse 11 in Richtung zur Gelenkkugel 5 verjüngende Schrägfläche 12, die mit einer komplementär geformten Gegenschräge 13 an der Unterseite des Gleitlagers 7 zusammenwirkt.

Im Lagergehäuse 3 ist ungefähr auf der Höhe des Klemmringes 9 eine Gewindebohrung 14 angeordnet, in der ein Gewindebolzen 15 quer zur Längsmittelachse 11 des Lagergehäuses 3 bewegt werden kann. Am äußeren Ende 16 des Gewindebolzens 15 ist ein Handrad 17 zur manuellen Betätigung angeordnet. Das innere Ende 18 ist etwa konisch zulaufend ausgeformt und greift, in einen axialen Spalt 19 im Klemmring 9 ein. Der Spalt 19 wirkt dabei mit dem konischen Ende 18 des Gewindebolzens 15 derart zusammen, dass bei zunehmendem Eindringen des Gewindebolzens 15 in den Spalt 19, der Klemmring 9 aufgeweitet wird. Etwa gegenüber dem Spalt 19 weist der Klemmring 9 eine Materialschwächung 20 auf, um ein einfacheres Aufweiten zu ermöglichen.

Beim Aufweiten des Klemmringes 9 wird nun durch das Zusammenwirken der Schrägflächen 12, 13 das untere Gleitlager 7 axial in Richtung der Gelenkkugel 5 verdrängt, wodurch ein höherer Anpressdruck erzeugt wird. Die Gelenkkugel 5 wird dadurch fester gegen das obere Gleitlager gedrückt und durch die höhere Reibung festgesetzt. Durch stärkeres Aufweiten des Klemmringes 9 wird die Gelenkkugel 5 fester gehalten.

Da der Klemmring 9 über den gesamten Umfang des Gleitlagers 7 gleichmäßig wirkt, ist eine sehr homogene Krafteinwirkung gegeben. Es entstehen bei diesem Klemmvorgang keine Dreh- oder Kippmomente auf das Gleitlager 7, so dass Beschädigungen des Lagergehäuses 3 oder des Gleitlagers 7 durch Verkanten praktisch ausgeschlossen sind. Zudem ist durch die vollumfängliche Abstützung des Gleitlagers 7 die Tragkraft der Neigevorrichtung 2 wesentlich hoher als im Stand der Technik.

Beim Ausdrehen des Gewindebolzens 15 wird der Klemmring 9 durch die eigene elastische Federkraft wieder zusammengezogen. Das Gleitlager 7 kann, durch die Gewichtskraft bedingt, nach unten rutschen und so die Gelenkkugel 5 für Bewegungen freigeben.

Der Gewindebolzen 15 ist zum Schutz vor Verschmutzung von einer an das Lagergehäuse 3 angeformten zylinderförmigen Buchse 21 umgeben, wobei in einer Nut an dem Gewindebolzen 15 ein O-Ring 22 eingesetzt ist, der andererseits an der Innenwand der Buchse 21 anliegt. Das Handrad 17 am Ende des Gewindebolzens 15 weist einen in Richtung zum Lagergehäuse 3 vorstehenden Rand 23 auf, der die Buchse 21 übergreift und ein Vordringen von Schmutz zu der Buchse 21 erschwert.

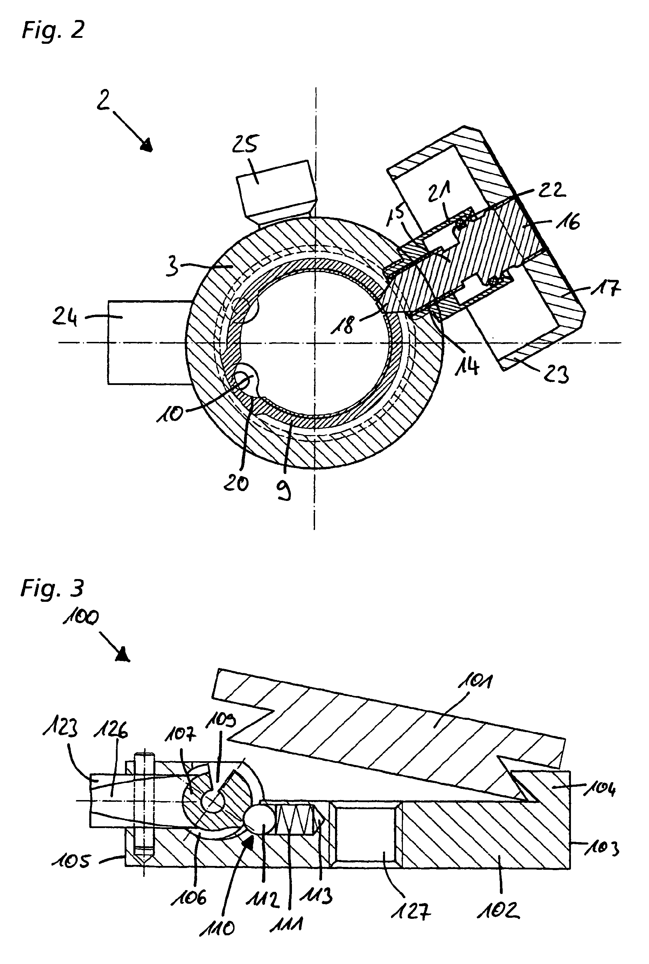

In Fig. 2 ist zu erkennen, dass der Klemmring 9 in entspanntem Zustand nur im Bereich der Materialschwächung 20 an der Lagergehäuse-Innenwand anliegt damit genug Raum zur Aufweitung zur Verfügung steht. Der Spalt 19 im Klemmring 9 ist im Grundzustand ungefähr so breit wie die Materialdicke. Das Widerlager 10 ist im Ausführungsbeispiel durch einen Sicherungsring gebildet, der in einer umlaufenden inneren Nut im Lagergehäuse unterhalb des Klemmringes 9 angeordnet ist. Die beiden anderen angeformten Buchsen 24, 25 sind für weitere Funktionen vorgesehen, die jedoch nicht Gegenstand der Erfindung sind.

In der Fig. 1 ist weiterhin eine Haltevorrichtung 100 gezeigt, die im wesentlichen eine Basis 102 mit einer zentralen Gewindebohrung 127 aufweist, in die der Gewindefortsatz 6 der Gelenkkugel 5 geschraubt ist.

Die Basis 102 weist eine als Schwalbenschwanzführung ausgeformte Aufnahme für eine Wechselplatte 101 auf. Die Wechselplatte 101 wird an einem optischen Instrument befestigt, das mit der Basis 102 verbunden werden soll.

An der etwa rechteckigen Basis 102 ist an einer Längsseite 103 eine Führungsschiene 104 der Schwalbenschwanzführung angeformt. An der gegenüberliegenden Längsseite 105 der Basis 102 ist eine etwa zylinderförmige Nut 106 angeordnet, in die eine zylinderförmige Klemmvorrichtung 107 eingesetzt ist. Damit die Klemmvorrichtung 107 nicht in Längsrichtung 128 aus der Nut 106 fallen kann, ist an beiden Enden der Klemmvorrichtung 107 jeweils ein über die Nut 106 ragender Kragen 108 angeformt. Die Klemmvorrichtung 107 weist eine in Längsrichtung 128 durchgehende, segmentförmige Öffnung 109 auf, die die Gegenführung der Schwalbenschwanzführung bildet. Erfindungsgemäß ist die Klemmvorrichtung 107 drehbar in der Nut 106 gelagert und weist im wesentlichen zwei Stellungen auf.

In der in der Fig. 1 gezeigten, geschlossenen Stellung wird eine eingesetzte Wechselplatte 101 verschieblich in der Führung gehalten.

Eine zweite, offene Stellung der Klemmvorrichtung 107, in der die Wechselplatte 101 nach oben entnommen oder von oben eingesetzt werden kann, ist in der Fig. 3 gezeigt. Beim Einsetzen der Wechselplatte 101 in der offenen Stellung, wird die Wechselplatte 101 zuerst, wie abgebildet, einseitig in die feste Führungsschiene 104 eingehakt und dann abgesenkt. Beim Auflegen der Wechselplatte 101 auf die Klemmvorrichtung 107 dreht diese sich durch den Auflagedruck in die geschlossene Stellung.

Die Rastvorrichtung 110 besteht aus einer Feder 111 und einer Rastkugel 112, die in einer Bohrung 113 in der Basis 102 etwa mittig von der Klemmvorrichtung 107 angeordnet ist und mit einer kugelförmigen Vertiefung 114 in der Klemmvorrichtung 107 zusammenwirkt. Durch die Rastvorrichtung 110 erhält die Offen-Stellung der Klemmvorrichtung 107 eine definierte Lage.

Wie aus einem Vergleich der Figuren 1 und 3 erkennbar ist, wird die Klemmvorrichtung 107 von der Rastkugel 112 beaufschlagt, die mittels der Feder 111 gegen den Umfang der Klemmvorrichtung 107 gepresst wird. Am Umfang der Klemmvorrichtung 107 ist die vorzugsweise kugelförmige oder sonst wie kugelige Vertiefung 114 vorgesehen, in welche die Rastkugel 112 unter Übertragung eines Drehmomentes und Verdrehen der Klemmvorrichtung 107 in die Entnahmestellung einrücken kann. Beim Aushebeln der an der Kamera vorgesehenen Wechselplatte 101 aus der Klemmvorrichtung 107 wird diese noch nicht vollständig in ihre Entnahmestellung verschwenkt, - vielmehr dreht die Klemmvorrichtung 107 erst in Folge des durch die sich in die Vertiefung 114 bewegende Rastkugel 112 bewirkten Drehmoments vollständig in die Entnahmeposition. In dieser Entnahmeposition lässt sich eine Wechselplatte 101 mit ihrer an dem benachbarten Längsrand vorgesehenen Feder ohne größeres Einfädeln in die komplementär geformte Längsnut in der Klemmvorrichtung 107 einschwenken.

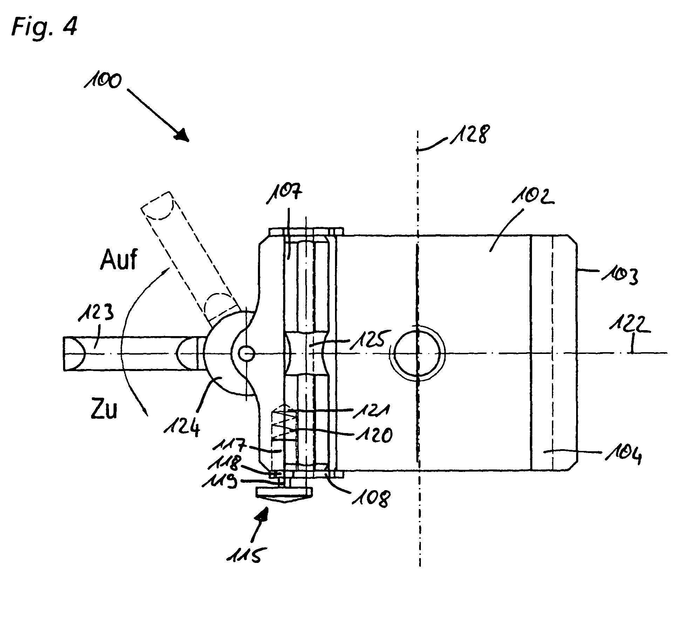

An der Klemmvorrichtung 107 ist weiterhin eine Sicherung 115 angeordnet, die ein unbeabsichtigtes Verdrehen der Klemmvorrichtung 107 und dadurch ein Lösen der Wechselplatte 101 verhindert. Dazu ist, wie in Fig. 4 erkennbar, in der Basis 102 in Längsrichtung 128 neben der Klemmvorrichtung 107 ein Federstift 116 angeordnet, der drei verschiedene Durchmesser 117, 118, 119 aufweist und am Kragen 108 der Klemmvorrichtung 107 eine Kerbe angeordnet. In der geschlossenen Stellung der Klemmvorrichtung 107 liegt die Kerbe an dem mittleren Durchmesser-Teil 118 des Federstifts 116 an und blockiert damit eine Drehbewegung der Klemmvorrichtung 107. Der weiter innen liegende größere Durchmesser 117 liegt in Längsrichtung 128 an dem Kragen 108 an und verhindert in beiden Stellungen der Klemmvorrichtung 107 ein Herausfallen des Federstifts 116 aus der Bohrung 121. Zum Öffnen der Sicherung 115 muss nun der Federstift 116 gegen die Feder 120 nach innen gedrückt werden, so dass der Teil 119 mit dem geringsten Durchmesser dem Kragenumfang gegenübersteht und der Eingriff der Kerbe aufgehoben wird und die Klemmvorrichtung 107 zur Drehung freigegeben wird. Durch das Herausheben der Wechselplatte 101 aus der Führung wird die Klemmvorrichtung 107 in die Offen-Stellung gedreht.

Um ein Verschieben der Wechselplatte 101 in der Schwalbenschwanzführung zu verhindern, kann die Klemmvorrichtung 107 zusätzlich noch in Querrichtung 122 bewegt werden. Dazu ist die Nut 106 in Querrichtung 122 der Basis 102 etwas größer als der Durchmesser der Klemmvorrichtung 107, so dass eine lineare Bewegung möglich ist.

Zur Betätigung der Klemmvorrichtung 107 ist ein Bedienelement 123 vorgesehen, das drehbar an der Basis 102 gelagert ist und ein Exzenterrad 124 aufweist, das mit der Klemmvorrichtung 107 zusammenwirkt. Eine Drehbewegung des Bedienelements 123 wird dadurch in eine Querbewegung der Klemmvorrichtung 107 umgesetzt.

Wie in der Fig. 4 zu erkennen ist, weist die Klemmvorrichtung 107 im Angriffsbereich des Bedienelements eine umlaufende sphärische Nut 125 auf. Am Umfang des Exzenterrads 124 ist eine ebenfalls sphärische Nut 126 angeordnet, die entsprechend der Exzentrizität im Verlauf des Umfangs tiefer wird und mit der Nut 125 in der Klemmvorrichtung 107 zusammenwirkt. Diese sphärische Nut 126 ist notwendig, weil die Klemmvorrichtung 107 zusätzlich drehbar ist.

Nicht abgebildet ist ein weiterer Sicherungsstift, der verhindert, dass die Wechselplatte 101 versehentlich aus der Führung herausgeschoben werden kann.

Die Haltevorrichtung 100 mit der drehbaren Klemmvorrichtung 107 ermöglicht ein einfaches Einsetzen auch schwerer oder sperriger optischer Instrumente auf den Stativkopf 1. Dabei muss der Benutzer sich nicht bücken oder umständlich die Führung in der Haltevorrichtung 100 ertasten. Weiterhin ermöglicht der erfindungsgemäße Kugelkopf 2 die sichere Aufnahme und Arretierung der schweren Instrumente, da die Tragkraft durch die gleichmäßige Klemmung der Gelenkkugel 5 gegenüber dem Stand der Technik entsprechend vergrößert wird.

### Bezugszeichen

- 1: Stativkopf
- 2: Neigevorrichtung
- 3: Lagergehäuse
- 4: Oberes Ende
- 5: Gelenkkugel
- 6: Gewindefortsatz
- 7: Gleitlager
- 8: Lagerfläche
- 9: Klemmring
- 10: Widerlager
- 11: Längsmittelachse
- 12: Schrägfläche
- 13: Gegenschräge
- 14: Gewindebohrung
- 15: Gewindebolzen
- 16: Äußeres Ende
- 17: Handrad/Beaufschlagungselement
- 18: Inneres Ende
- 19: Spalt
- 20: Materialschwächung
- 21: Buchse
- 22: O-Ring
- 23: Rand
- 24: Buchse
- 25: Buchse
- 100: Haltevorrichtung
- 101: Wechselplatte
- 102: Basis
- 103: Längsseite (fest)
- 104: Führungsschiene (fest)
- 105: Längsseite
- 106: Nut
- 107: Klemmvorrichtung
- 108: Kragen
- 109: Öffnung
- 110: Rastvorrichtung
- 111: Feder
- 112: Kugel
- 113: Bohrung
- 114: Vertiefung
- 115: Sicherung
- 116: Federstift
- 117: Durchmesser groß
- 118: Dito Mittel
- 119: Dito Klein
- 120: Feder
- 121: Bohrung
- 122: Querrichtung
- 123: Bedienelement
- 124: Exzenterrad
- 125: Nut Klemmvorr.
- 126: Nut Exzenter
- 127: Gewindebohrung
- 128: Längsrichtung

## Patentansprüche

1. Stativkopf mit einer Neigevorrichtung (100) einem Kugelgelenk, das eine in einem Lagergehäuse (3) verschwenkbar gelagerte Gelenkkugel (5) aufweist, die zwischen zwei Gleitlagern in dem Lagergehäuse (3) gelagert ist, von denen eines der Gleitlager (7) in Beabstandungsrichtung der Gleitlager (7) axial verschiebbar in dem Lagergehäuse (3) gelagert ist, wobei das Kugelgelenk zwischen an einander abgewandten Enden der Neigevorrichtung (100) befindlichen Anschlussstellen angeordnet ist, von denen eine mit einer Kamera, einem Spektiv, einem Fernglas oder dergleichen optischen Gerät oder einer Haltevorrichtung und die andere mit wenigstens einem Stativbein oder dergleichen Halterung verbunden oder verbindbar ist, **dadurch gekennzeichnet, dass** in dem Lagergehäuse (3) ein an einem Spalt aufweitbarer Klemmring (9) mit einer sich zur Längsmittelebene in Richtung zur Gelenkkugel (5) verjüngenden Schrägfläche (12) angeordnet ist und die Schrägfläche (12) mit einer komplementär geformten Gegenschräge (13) an dem axial verschiebbaren Gleitlager (7) zusammenwirkt.

2. Stativkopf nach Anspruch 1, **dadurch gekennzeichnet, dass** der Klemmring (9) etwa gegenüber dem Spalt (19) eine Materialschwächung (20) aufweist.

3. Stativkopf nach Anspruch 1 oder 2, **dadurch gekennzeichnet, dass** ein Beaufschlagungselement (17) vorgesehen ist, das ein etwa konisch ausgebildetes, in den Spalt (19) des Klemmrings (9) eingreifendes Ende (18) aufweist und das in einem Gewindeloch (14) des Lagergehäuses (3) drehbar gelagert ist.

## Claims

1. A tripod head with an inclination device (100) with a universal joint, which comprises a joint ball (5) mounted in a swivelling manner in a bearing housing (3), said joint ball being mounted between two sliding bearings in the bearing housing (3), one of the sliding bearings (7) whereof being mounted axially displaceable in the bearing housing (3) in the direction of the spacing of the sliding bearings (7), wherein the universal joint is disposed between connecting points located at ends of the inclination device (100) facing away from one another, one of which connecting points is or can be connected to a camera, a spotting scope, a pair of binoculars or such optical instrument or a holding device and the other is or can be connected to at least one tripod leg or such holding device, **characterised in that** a clamping ring (9), which can be splayed at a gap and has a bevelled face (12) tapering towards the longitudinal central plane in the direction towards the joint ball (5), is disposed in the bearing housing (3) and the bevelled face (12) cooperates with a counter-bevel (13) formed in a complementary manner on the axially displaceable sliding bearing (7).

2. The tripod head according to claim 1, **characterised in that** the clamping ring (9) comprises a material weakening (20) approximately opposite the gap (19).

3. The tripod head according to claim 1 or 2, **characterised in that** an admission element (17) is provided, which comprises an end (18) formed roughly conically and engaging in the gap (19) of the clamping ring (9) and which is mounted in a rotatable manner in a threaded hole (14) of the bearing housing (3).

## Revendications

1. Tête de trépied dotée d'un dispositif d'inclinaison (100) avec une articulation à rotule, qui comprend une rotule articulée (5) logée à pivotement dans un boîtier de palier (3), laquelle est montée entre deux paliers lisses dans le boîtier de palier (3), dont l'un des paliers lisses (7) est monté dans le boîtier de palier (3) de façon coulissante axialement dans le sens d'espacement des paliers lisses (7), l'articulation à rotule étant disposée entre des points de branchement se trouvant sur des extrémités opposées les unes aux autres du dispositif d'inclinaison (100), points dont l'un est relié ou peut être relié à une caméra, une longue vue, des jumelles ou un appareil optique similaire ou un dispositif de maintien et l'autre est relié ou peut être relié à au moins une branche de trépied ou un support similaire, **caractérisée en ce qu'**une bague de serrage (9) pouvant s'élargir sur une fente avec une surface inclinée (12) se rétrécissant par rapport au plan médian longitudinal en direction de la rotule articulée (5) est disposée dans le boîtier de palier (3) et la surface inclinée (12) coopère avec un contre-chanfrein (13) formé de façon complémentaire sur le palier lisse (7) coulissant axialement.

2. Tête de trépied selon la revendication 1, **caractérisée en ce que** la bague de serrage (9) présente un affaiblissement de matière (20) à peu près en face de la fente (19).

3. Tête de trépied selon la revendication 1 ou 2, **caractérisée en ce qu'**il est prévu un élément de
sollicitation (17) qui présente une extrémité (18) conçue à peu près en forme de cône, s'engageant dans la fente (19) de la bague de serrage (9), et qui est monté à rotation dans un trou fileté (14) du boîtier de palier (3).
